# EUROPÄISCHE PATENTSCHRIFT

(11) **EP 3 820 742 B1**
(45) Veröffentlichungstag und Bekanntmachung des Hinweises auf die Patenterteilung: **07.06.2023**
(21) Anmeldenummer: 19742694.3
(22) Anmeldetag: 04.07.2019
(51) Int. Cl.: B60R 13/10

(54) **KENNZEICHEN FÜR EIN FAHRZEUG UND VERFAHREN ZUR HERSTELLUNG EINES KENNZEICHENS FÜR EIN FAHRZEUG**
LICENSE PLATE FOR A VEHICLE, AND METHOD FOR PRODUCING A LICENSE PLATE FOR A VEHICLE
PLAQUE D'IMMATRICULATION POUR VÉHICULE ET PROCÉDÉ DE PRODUCTION D'UNE PLAQUE D'IMMATRICULATION POUR VÉHICULE

(30) Priorität: 11.07.2018 DE 102018005440
(43) Veröffentlichungstag der Anmeldung: 19.05.2021
(73) Patentinhaber: Tönnjes ISI Patent Holding GmbH, 27751 Delmenhorst (DE)
(72) Erfinder: PRETORIUS, Albertus, Jacobus, Karalee, Queensland 4306 (AU)
(74) Vertreter: Hoener, Matthias
(86) Internationale Anmeldenummer: PCT/EP2019/068000
(87) Internationale Veröffentlichungsnummer: WO 2020/011644

(56) Entgegenhaltungen:
- WO-A1-2006/128448
- WO-A1-2008/079902
- WO-A2-2014/012676
- DE-A1- 2 829 885
- DE-A1-102009 033 559
- DE-U1-202019 001 169
- US-B2- 7 034 688

## Beschreibung

Die Erfindung betrifft ein Kennzeichen für ein Fahrzeug gemäß dem Anspruch 1.

Des Weiteren betrifft die Erfindung ein Verfahren zur Herstellung eines Kennzeichens für ein Fahrzeug gemäß dem Anspruch 13.

Bei den Kennzeichen gemäß der Erfindung handelt es sich um sogenannte Nummernschilder, die vorne und/oder hinten an einer Karosserie oder einer Stoßstange eines Fahrzeuges befestigt werden und solche, die auf einer Fensterscheibe des Fahrzeugs geklebt werden, und zwar insbesondere als Zusatzkennzeichen.

Kennzeichen der genannten Art werden häufig gefälscht oder für fremde Fahrzeuge verwendet. Um das zu verhindern sind Kennzeichen bekannt, welche einen berührungslos auslesbaren Datenträger aufweisen. Dieser enthält relevante Daten des Fahrzeugs, zu dem das Kennzeichen gehört. Das Auslesen dieser Daten erfolgt mittels eines externen Lesegeräts. Der Vergleich der ausgelesenen Daten mit dem Fahrzeug, an dem das Kennzeichen verwendet wird, lässt Rückschlüsse auf Manipulationen zu, insbesondere, wenn das Kennzeichen einem fremdem Fahrzeug zugeordnet ist.

Bisher bekannte Kennzeichen mit berührungslos auslesbaren Datenträgern weisen eine Antenne auf. Diese ist mit elektrischen Leitungen an dem Datenträger angeschlossen, um die Übertragung der auf dem Datenträger gespeicherten Daten zu ermöglichen. Bei dieser Antenne kann es sich um eine sogenannte Schlitzantenne in einem Kennzeichenkörper des Kennzeichens handeln. Diese als schlitzartige Ausnehmung in dem Kennzeichenkörper ausgebildete Antenne ist elektrisch, insbesondere induktiv, mit dem Datenträger gekoppelt. Der Datenträger ist dazu in einer bestimmten Position relativ zu der Schlitzantenne zu positionieren, um die elektromagnetische Kopplung herzustellen. Dazu kann der Datenträger beispielsweise in einer Verbreiterung des Schlitzes der Schlitzantenne angeordnet sein. Die DE 10 2009 033559 A1 offenbart einen Stand der Technik eines solchen Kennzeichens für ein Kraftfahrzeug. Sobald jedoch die relative

Positionierung des Datenträgers zu der Schlitzantenne von einem vorgegebenen Wert abweicht, kann es zu Fehlfunktionen bzw. zu einem Ausfall des berührungslos auslesbaren Datenträgers kommen. Die Toleranz in der Positionierung des Datenträgers relativ zu dem Schlitz kann weniger als 1 mm betragen. Insbesondere durch einen Stanzprozess, durch den der Schlitz in dem Kennzeichenkörper erzeugt wird, kann es zu Ungenauigkeiten bzw. ungewollten Verformungen des Kennzeichenkörpers kommen. Auch durch das Prägen einer Beschriftung in den Kennzeichenkörper, das in der Regel nach dem Stanzen und nach dem Einlegen des Datenträgers in den Schlitz erfolgt, kann die relative Positionierung des Datenträgers zu dem Schlitz nachteilig verändert werden. Ebenso kann ein versehentliches Anfahren des Fahrzeuges mit dem Kennzeichen an einen Bordstein, einen Baum oder dergleichen zu einer der vorgenannten Verformung des Kennzeichenkörpers führen.

Somit gestaltet sich zum einen die Herstellung der bekannten Kennzeichen mit Schlitzantenne als aufwendig und zum anderen sind diese insbesondere unter einem mechanischen Einfluss sehr fehleranfällig.

Der Erfindung liegt die Aufgabe zugrunde, ein Verfahren zur Herstellung eines Kennzeichens sowie Kennzeichen für ein Fahrzeug mit einem Datenträger und einer Antenne zu schaffen, das auf eine zuverlässige Art und Weise betreibbar und einfach herzustellen ist.

Ein Kennzeichen für ein Fahrzeug zur Lösung dieser Aufgabe weist die Merkmale des Anspruchs 1 auf. Demnach ist es vorgesehen, dass ein Kennzeichenkörper des Kennzeichens einen Durchbruch aufweist. Dieser Durchbruch ist erfindungsgemäß von einem flächigen, wenigstens teilweise elektrisch leitfähigen Träger zumindest weitestgehend abdeckbar. Dieser Träger weist mindestens einen Schlitz auf, der eine Antenne bildet, bzw. eine Schlitzantenne, und mindestens einen an diese Antenne elektrisch koppelnden, berührungslos auslesbaren Datenträger. Dieses erfindungsgemäße Kennzeichen gestattet zunächst die Herstellung eines Kennzeichenkörpers mit einem Durchbruch, wobei die einzuhaltende Toleranz für die Herstellung keinen großen Anforderungen genügen muss. Der wenigstens teilweise elektrisch leitende Träger kann vorgefertigt und sodann auf dem Durchbruch abgelegt werden. Beispielsweise lässt sich der Träger mit dem mindestens einen Schlitz und dem mindestens einen Datenträger vorab durch ein eigenes Verfahren, insbesondere durch ein Druckverfahren, herstellen. Auf diese Weise kann ein besonders robustes Kennzeichen hergestellt werden, ohne dass dazu die Herstellungsgenauigkeit des Kennzeichens bzw. des Kennzeichenkörpers zu erhöhen ist. Vielmehr wird durch das erfindungsgemäße Kennzeichen die erforderliche Herstellungsgenauigkeit reduziert.

Bevorzugtermaßen kann es weiter vorgesehen sein, dass der Datenträger einen RFID-Chip und mindestens eine damit elektrisch leitende Spule aufweist, über die der Datenträger und/oder der RFID-Chip induktiv mit der Antenne des Trägers koppelbar ist. Durch diese Kopplung können die Daten, die auf dem Datenträger gespeichert sind, auf eine einfache und zuverlässige Art und Weise ausgelesen werden. Gleichermaßen lassen sich auf die gleiche zuverlässige und einfache Art und Weise Daten auf dem Datenträger speichern. Durch die Verwendung eines RFID-Chips kann der Datenträger mittels bekannter Auslesegeräte ausgelesen bzw. neu beschrieben werden.

Insbesondere kann es die vorliegende Erfindung weiter vorsehen, dass der Träger als selbstklebende Folie ausgebildet ist, die derart dimensioniert ist, dass sie wenigstens bereichsweise mit einem Randbereich des Durchbruchs in dem Kennzeichenkörper überlappt. Dabei ist es vorzugsweise vorgesehen, dass der Träger die gleiche Form aufweist, wie der Durchbruch nur eben etwas größer ist, sodass die Randbereiche des Trägers mit denen des Durchbruchs überlappen. Bevorzugterweise ist der Durchbruch rechteckig, insbesondere schlitzartig, ausgebildet. Über diesen rechteckigen Durchbruch ist sodann der ebenfalls rechteckige Träger ablegbar. Durch die selbstklebende Ausgestaltung der Folie kommt es zu einer einfachen und zuverlässigen Fixierung der Folie auf der Oberfläche des Kennzeichenkörpers bzw. über dem Durchbruch.

Ein weiteres bevorzugtes Ausführungsbeispiel der vorliegenden Erfindung kann es vorsehen, dass der Träger, insbesondere die Folie, wenigstens eine teilweise elektrisch leitende Beschichtung aufweist und durch diese Beschichtung die wenigstens eine Antenne, insbesondere eine Antennenstruktur, gebildet ist. Es ist beispielsweise denkbar, dass die Antennenstruktur bzw. die Schlitzantenne durch Bedampfen des Trägers mit einem leitfähigen Material hergestellt wird. Dadurch kann als Substrat für den Träger ein besonders flexibles Material, wie beispielsweise ein Kunststoff, verwendet werden, auf dem sodann die elektrisch leitende Schicht aufzudampfen, aufzudrucken oder dergleichen ist. Auch bei einem unvorhergesehenen Verbiegen des Kennzeichenkörpers kommt es nicht zu einer Beschädigung der Antennenstruktur. Vielmehr vollzieht der Träger die Biegebewegung mit, und zwar in einer reversiblen Art und Weise.

Darüber hinaus kann es erfindungsgemäß außerdem vorgesehen sein, dass der Träger, insbesondere die Folie, als metallische Folie ausgebildet ist und durch einen Schlitz in dem Träger die wenigstens eine Antenne, insbesondere eine Antennenstruktur, gebildet ist. Bei dieser metallischen Folie kann es sich beispielsweise um eine Aluminiumfolie, eine Kupferfolie oder dergleichen handeln. Gleichermaßen ist es denkbar, dass es sich bei der Folie um eine flexible Folie aus Kunststoff, wie beispielsweise PET, handelt.

Weiter kann es erfindungsgemäß vorgesehen sein, dass der Schlitz auf dem Träger an einem Ende eine Verbreiterung aufweist, in der der Datenträger und/oder der RFID-Chip und/oder die Spule, insbesondere elektrisch isoliert von den leitenden Bereichen des Trägers, positioniert ist. Dadurch, dass der Schlitz auf dem Träger mit der Verbreiterung und dem Datenträger bereits durch ein gesondertes Verfahren, wie beispielsweise ein Druckverfahren, vorbereitet wird, kann hier eine ausreichend hohe Genauigkeit erreicht werden, und zwar unabhängig davon, ob der Kennzeichenkörper noch geprägt werden muss. Selbst wenn der Kennzeichenkörper für die Beschriftung noch geprägt werden muss, überträgt sich eine Verformung des Kennzeichenkörpers nicht auf den elastischen Träger.

Des Weiteren kann es die Erfindung vorsehen, dass der Kennzeichenkörper aus einem elektrisch leitfähigen Material, vorzugsweise aus Aluminium oder einer Aluminiumlegierung oder dergleichen gebildet ist. Dies gestattet eine besonders einfache und flexible Bearbeitung des Kennzeichenkörpers.

Weiter kann hinzugefügt werden, dass der Träger mit der Antenne und dem Datenträger durch eine elektrisch leitende, selbstklebende, vorzugsweise beidseitig selbstklebende, Folie über dem Durchbruch auf dem Kennzeichenkörper applezierbar ist, sodass der Träger mechanisch und elektrisch mit dem Kennzeichenkörper gekoppelt ist. Durch diese elektrisch leitfähige Folie wird ein elektrischer Kontakt zwischen dem Träger bzw. der Schlitzantenne und dem Kennzeichenkörper hergestellt. Diese elektrische Kontaktierung der Schlitzantenne mit dem Kennzeichenkörper führt dazu, dass die aus dem Träger angeordnete Schlitzantenne als Antenne für den Datenträger fungieren kann. Durch die selbstklebende Eigenschaft dieser Folie kann diese sowohl auf eine einfache Art und Weise über dem Durchbruch des Kennzeichenkörpers aufgebracht werden als auch mit dem Träger fest in Verbindung gebracht werden. Diese elektrisch leitfähige Folie kann wenigstens über Randbereiche des Durchbruchs auf den Kennzeichenkörper appleziert werden. Dabei sind keine hohen Anforderungen an die Platzierungsgenauigkeit der Folie auf dem Kennzeichenkörper gegeben. Vielmehr kann die Folie mit einer Toleranz von einigen mm auf dem Kennzeichenkörper abgelegt werden.

Darüber hinaus kann es ein weiteres vorteilhaftes Ausführungsbeispiel der vorliegenden Erfindung vorsehen, dass der Träger und/oder der Kennzeichenkörper und/oder die Folie von einer, vorzugsweise wenigstens bereichsweise de-metallisierten, Reflexfolie mindestens größtenteils abgedeckt ist. Durch diese Reflexfolie lässt sich das Kennzeichen auch bei schwierigen Lichtverhältnissen besonders gut auslesen. Dadurch, dass wenigstens der Bereich über der Schlitzantenne bzw. über dem Durchbruch de-metallisiert ist, führt diese Reflexfolie auch nicht zu einer Störung in dem Datenübertrag zwischen einem Empfänger und dem berührungslos auslesbaren Datenträger. Bei der Reflexfolie kann es sich um eine retroreflektierende Reflexfolie handeln.

Vorzugsweise kann es außerdem vorgesehen sein, dass der Durchbruch von einer Rückseite des Kennzeichenkörpers aus mit einer nicht leitenden Abdeckung, insbesondere von einer PET-Folie, abgedeckt ist oder der Durchbruch mit einer, vorzugsweise elektrisch nicht leitenden, Masse ausfüllbar ist. Durch dieses Ausfüllen des Durchbruchs von der Rückseite kann verhindert werden, dass durch Umwelteinflüsse der Durchbruch bzw. der Träger mit der Antennenstruktur und dem Datenträger beschädigt wird. Darüber hinaus kann somit verhindert werden, dass Feuchtigkeit in die Schichtstruktur des Kennzeichens eintritt und, insbesondere bei Frost, diese zerstört. Diese Abdeckung kann auf die Rückseite des Kennzeichenkörpers aufgetragen bzw. aufgeklebt oder in den Durchbruch eingespritzt werden.

Ein Verfahren zur Herstellung eines Kennzeichens für ein Fahrzeug zur Lösung der eingangs genannten Aufgabe weist die Maßnahmen des Anspruchs 13 auf. Demnach ist es vorgesehen, dass zunächst ein Kennzeichenkörper mit einem Durchbruch versehen wird und wenigstens über Randbereiche dieses Durchbruchs eine selbstklebende, elektrisch leitfähige Folie aufgebracht wird, wobei auf diese Folie ein mindestens bereichsweise elektrisch leitfähiger Träger mit einer Schlitzantenne und einem Datenträger geklebt wird und anschließend der Kennzeichenkörper mit einer Reflexfolie versehen wird. Dieses Verfahren zur Herstellung eines Kennzeichens gestaltet sich als besonders einfach, da keine hohen Anforderungen an die Platzierung der einzelnen Bestandteile gegeben sind. Darüber hinaus lassen sich für die Durchführung dieses Verfahrens die bestehenden Anlagen zur Herstellung eines Kennzeichens mit einer Schlitzantenne verwenden. Dabei ist zunächst in den Kennzeichenkörper der schlitzartige Durchbruch zu stanzen. Da im Weiteren über diesen Durchbruch die elektrisch leitfähige, selbstklebende Folie applezierbar ist, können Ungenauigkeiten in dem Stanzprozess durch einen genügend großen Überlapp zwischen der leitenden Folie und dem Kennzeichenkörper ausgeglichen werden. Ebenso verhält es sich mit dem Aufbringen des Trägers auf die elektrisch leitfähige Folie. Auch hier ist es lediglich wesentlich, dass der Träger auf der selbstklebenden Folie platziert wird und wenigstens weitestgehend über dem Durchbruch angeordnet ist. Die dann folgende Applikation der, insbesondere retroreflektierende, Reflexfolie auf den Kennzeichenkörper bedarf ebenfalls keiner übermäßigen Genauigkeit. Für die Applikation der Reflexfolie ist genauso vorzugehen, wie bei bekannten Kennzeichen.

Darüber hinaus kann es erfindungsgemäß vorgesehen sein, dass nach dem Zusammenstellen des Kennzeichenkörpers, der Folie, des Trägers und der Reflexfolie eine Beschriftung in den Kennzeichenkörper geprägt wird. Durch die flexible bzw. nachgebende Verbindung zwischen dem Träger und dem Kennzeichenkörper durch die Folie können etwaige mechanische Deformationen, welche durch die Prägung verursacht werden, aufgefangen bzw. ausgeglichen werden. Auf diese Weise kann es nicht zu einer unvorteilhaften Verformung der Schlitzantenne kommen.

Durch den hier beschriebenen Träger mit der Schlitzantenne wird der Schlitz aus dem bekannten Kennzeichen mit Schlitzantenne aus dem Kennzeichenkörper auf einen eigenständigen Träger transferiert bzw. transportiert. Dadurch lässt sich zum einen das Herstellungsverfahren vereinfachen und zum anderen die Leistung der Datenübertragung verbessern. Der hier beschriebene Träger kann auch als *inlay* oder auch als Einlage in der Kennzeichenschichtstruktur bezeichnet werden.

Ein bevorzugtes Ausführungsbeispiel der Erfindung wird nachfolgend anhand der Zeichnung näher erläutert. In dieser zeigen:
- Fig. 1: eine Darstellung eines Kennzeichenkörpers,
- Fig. 2: eine Darstellung einer selbstklebenden Folie,
- Fig. 3: eine Darstellung eines Trägers,
- Fig. 4: eine Darstellung einer Reflexfolie,
- Fig. 5: eine Darstellung einer Abdeckung, und
- Fig. 6: eine Darstellung eines Kennzeichens für ein Fahrzeug.

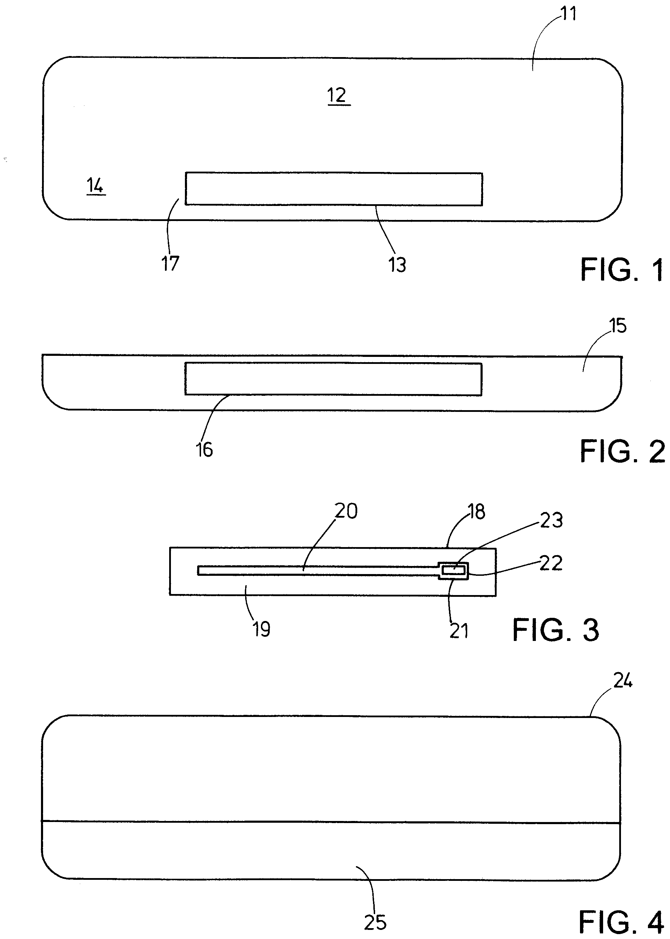

Das hier beschriebene Kennzeichen 10 für ein Fahrzeug ist schichtweise aus mehreren Bestandteilen aufgebaut. Als Basis des Kennzeichens 10 dient ein in der Fig. 1 schematisch dargestellter flächiger Kennzeichenkörper 11. Dieser Kennzeichenkörper 11 kann als rechteckige Platte aus einem Metall, insbesondere Aluminium oder einer Aluminiumlegierung, oder einem Kunststoff hergestellt sein. Die Ecken können so wie in der Fig. 1 dargestellt abgerundet sein. Die Längen der Seitenkanten entsprechen denen eines Standartkennzeichens für ein Fahrzeug. Es ist jedoch auch denkbar, dass die Dimensionierung des Kennzeichenkörpers 11 von der hier dargestellten abweicht. So ist es durchaus denkbar, dass der Kennzeichenkörper 11 quadratisch ist oder ein anderes Verhältnis der Seitenkanten aufweist.

Die Stärke des Bleches des Kennzeichenkörpers 11 kann 1 mm bzw. 2 mm oder mehrere mm betragen. Auf dem Kennzeichenkörper 11 befindet sich ein Beschriftungsfeld 12. In dieses Beschriftungsfeld 12 wird durch Prägen oder sonstige Verfahren eine nicht dargestellte Beschriftung aufgebracht. Durch diese Beschriftung wird das Fahrzeug primär identifiziert.

Gemäß der vorliegenden Erfindung weist der in der Fig. 1 dargestellte Kennzeichenkörper 11 einen Durchbruch 13 auf. Der in der Fig. 1 dargestellte Durchbruch 13 ist rechteckig bzw. schlitzartig ausgebildet und verläuft mit seiner Längsachse parallel zu einer Längsachse des Kennzeichenkörpers 11. Es ist jedoch auch denkbar, dass der Durchbruch 13 andersartig auf dem Kennzeichenkörper 11 orientiert ist bzw. eine andere Form, wie beispielsweise eine abgewinkelte Form, eine "T"-Form oder ein "H"-Form, aufweist.

Dem Kennzeichenkörper 11 ist auf seiner Oberseite 14 eine Folie 15 zugeordnet. Diese in er Fig. 2 dargestellte Folie kann vorzugsweise beidseitig selbstklebend ausgebildet sein und weist ebenfalls eine Ausnehmung 16 auf, die in ihrer Form mit der des Durchbruchs 13 korrespondiert. Die Form der Folie 15 kann der Form des Kennzeichenkörpers 11 angepasst oder andersartig ausgebildet sein. Wesentlich ist jedoch, dass die Folie 15 wenigstens bereichsweise mit einem Randbereich 17 des Durchbruchs 13 korrespondiert. Des Weiteren besteht ein wesentliches Merkmal der Folie 15 darin, dass diese elektrisch leitend ausgebildet ist. Dazu kann die Folie 15 entweder als metallische Folie ausgebildet sein oder eine entsprechende, beidseitige Beschichtung aufweisen, und zwar so, dass zwischen einer Vorder- und einer Rückseite der Folie 15 ein geringer elektrischer Widerstand besteht.

Diese Folie 15 ist derart auf der Oberseite 14 des Kennzeichenkörpers 11 zu platzieren, dass die Ausnehmung 16 der Folie 15 wenigstens weitestgehend mit dem Durchbruch 13 des Kennzeichenkörpers 11 zusammenfällt.

Ein wesentlicher Bestandteil des erfindungsgemäßen Kennzeichens 10 besteht in dem in der Fig. 3 dargestellten Träger 18. Dieser Träger 18 ist ebenfalls rechteckig ausgebildet und korrespondiert mit der Form des Durchbruchs 13 bzw. der Ausnehmung 16. Allerdings sind wenigstens zwei der Seitenkanten des rechteckigen Trägers 18 größer als die korrespondierenden Seitenkanten des Durchbruchs 13 bzw. der Ausnehmung 16, sodass bei einem Applezieren des Trägers 18 auf die Ausnehmung 16 der Folie 15 der Träger 18 wenigstens bereichsweise den Durchbruch 13 des Kennzeichenkörpers 11 überlappt.

Der Träger 18 ist ebenfalls elektrisch leitend ausgebildet. Dazu kann der Träger 18 entweder als metallische Folie oder Blech ausgebildet sein oder derart mit einer metallischen Beschichtung versehen sein, dass eine Oberflächenleitfähigkeit besteht.

Auf einer Oberseite 19 und/oder einer Unterseite weist der Träger 18 einen Schlitz 20 auf. Durch diesen Schlitz 20 ist der Träger 18 in diesem Bereich elektrisch nicht leitend. Bei dem in der Fig. 3 dargestellten Ausführungsbeispiel des Schlitzes 20 weist dieser an einem Ende eine Aufweitung 21 auf. Diese rechteckige Aufweitung 21 schließt direkt an den Schlitz 20 an und ist somit Teil des Schlitzes 20. Die Aufweitung 21 und der Schlitz 20 weisen eine gemeinsame Umrandung 22 auf. Diese Umrandung 22 bildet in dem elektrisch leitfähigen Träger 18 eine Schlitzantenne. Diese Schlitzantenne dient dem in der Aufweitung 21 angeordnete Datenträger 23 als Antenne. Dem Datenträger 23 kann außerdem ein RFID-Chip oder ein ähnliches aktives oder passives Bauteil zur Übermittlung und zum Empfang von Daten zugeordnet sein. Auf dem Datenträger 23 sind Informationen über das Fahrzeug sowie über den Fahrzeughalter abspeicherbar. Es ist auch denkbar, dass weitere Informationen im Zusammenhang mit dem Fahrzeug auf dem Träger 23 gespeichert sind, sodass sie von einer außenstehenden Person mit einem entsprechenden Gerät berührungslos auslesbar sind.

Der Träger 18 kann als folienartiger Streifen mit der Antennenstruktur 20 und dem Datenträger 23 durch ein entsprechendes Bedampfungsverfahren oder Druckverfahren vorgefertigt werden. Durch diese Vorfertigung lässt sich eine sehr hohe Genauigkeit sowohl in der Struktur des Schlitzes 20 als auch in der Positionierung des Datenträgers 23 erreichen. Die erreichbare Genauigkeit liegt im Submillimeter-Bereich. Für die Platzierung des Trägers 18 mitsamt des Schlitzes 20 und des Datenträgers 23 auf der Folie 15 ist sodann eine geringere Genauigkeit bzw. eine höhere Toleranz anwendbar. Der Träger 18 ist lediglich derart auf der Folie 15 zu platzieren, dass sich der Schlitz 20 über dem Durchbruch 13 befindet und nicht mit dem Randbereich 17 überlappt. Somit beträgt die erforderliche Platzierungsgenauigkeit einige mm. Dies vereinfacht insbesondere das bisherige Herstellungsverfahren, bei dem insbesondere die Platzierung eines Datenträgers in einer Aufweitung eines Schlitzes in dem Kennzeichenkörper kritisch war. Durch die Flexibilität des Trägers 18 behält der Datenträger 23 auch bei einem Stoß oder einer Biegung des Kennzeichenkörpers 11 mitsamt des Trägers 18 seine relative Position bzgl. des Schlitzes 20 bzw. der Aufweitung 21 bei.

Auf den Kennzeichenkörper 11 bzw. auf die Folie 15 und den Träger 18 wird eine in der Fig. 4 dargestellte, insbesondere retroreflektierende, Reflexfolie 24 appleziert. Diese Reflexfolie 24 kann selbstklebend ausgebildet sein, sodass sie auf der Oberseite 14 des Kennzeichenkörpers 11 festklebbar ist. Die Reflexfolie 24 ist wenigstens weitestgehend metallisiert, sodass sie bei einer entsprechenden Beleuchtung auch bei schlechten Sichtverhältnissen reflektiert. In einem unteren Bereich 25 der Reflexfolie ist diese de-metallisiert, d. h., dass die Reflexfolie 24 in diesem Bereich nicht metallisiert ist und somit auch nicht reflektiert. Dieser untere Bereich 25 deckt sich mit dem Bereich, in dem der Träger 18 mit der Schlitzantenne 20 positioniert ist. Durch diese De-Metallisierung im unteren Bereich 25 kommt es zu keiner elektromagnetischen Störung des Datenträgers 23 durch die Metallisierung der Reflexfolie 24.

In ihrer Form entspricht die in der Fig. 4 dargestellte Reflexfolie 24 der Form des Kennzeichenkörpers 11. Es kann jedoch auch vorgesehen sein, dass sich die Reflexfolie 24 in ihrer Form von der des Kennzeichenkörpers 11 unterscheidet.

Schließlich kann in dem Durchbruch 13 von einer Rückseite des Kennzeichenkörpers 11 eine nichtleitende Abdeckung 26, insbesondere eine PET-Folie geklebt oder eine nichtleitende Masse, wie Epoxidharz, gefüllt werden. Durch diese elektrisch nichtleitende Abdeckung 26 wird der Träger 18 vor Umwelteinflüssen sowie mechanischen Stößen geschützt. Die Abdeckung 26 kann zusammen mit dem Träger 18 auch als Einheit ausgebildet sein und dem Durchbruch 13 zugeführt werden.

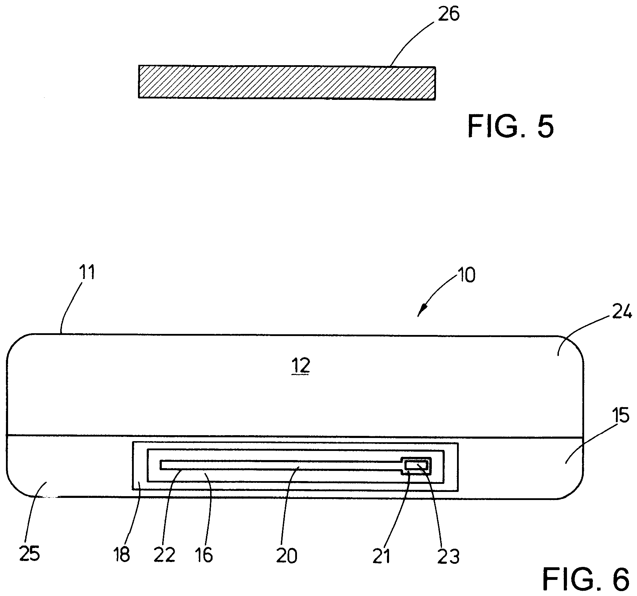

In der Fig. 6 ist ein erfindungsgemäßes Kennzeichen 10 dargestellt ohne eine Beschriftung. Der folgende Prägeprozess kann auf dem Beschriftungsfeld 12 erfolgen, und zwar ohne, dass durch eine mechanische Deformation des Kennzeichenkörpers 11 die Funktionsfähigkeit der Antenne bzw. des Datenträgers 23 beeinflusst wird. Durch die Flexibilität des Datenträgers 23 können etwaige Verformungen, verursacht durch das Prägen oder sonstige Stöße, kompensiert werden.

### Bezugszeichenliste

- 10: Kennzeichen
- 11: Kennzeichenkörper
- 12: Beschriftungsfeld
- 13: Durchbruch
- 14: Oberseite
- 15: Folie
- 16: Ausnehmung
- 17: Randbereich
- 18: Träger
- 19: Oberseite
- 20: Schlitz
- 21: Aufweitung
- 22: Umrandung
- 23: Datenträger
- 24: Reflexfolie
- 25: unterer Bereich
- 26: Abdeckung

## Patentansprüche

1. Kennzeichen (10) für ein Fahrzeug mit einem flächigen Kennzeichenkörper (11), der mindestens ein Beschriftungsfeld (12) aufweist, mit mindestens einer Beschriftung, die dem Beschriftungsfeld (12) des Kennzeichenkörpers (11) zugeordnet ist und mit einer wenigstens bereichsweise metallisierten Reflexfolie (24), wobei der Kennzeichenkörper (11) einen Durchbruch (13) aufweist, der von einem flächigen, wenigstens teilweise elektrisch leitenden Träger (18) zumindest teilweise abdeckbar ist, wobei der Träger (18) eine durch zumindest einen Schlitz (20) gebildete Antenne und einen an diese Antenne elektrisch koppelnden berührungslos auslesbaren Datenträger (23) aufweist und der Träger (18) als Folie (15) ausgebildet ist, die derart dimensioniert ist, dass sie wenigstens bereichsweise mit einem Randbereich (17) des Durchbruchs (13) in dem Kennzeichenkörper (11) überlappt.

2. Kennzeichen (10) für ein Fahrzeug nach Anspruch 1, **dadurch gekennzeichnet, dass** der Datenträger (23) einen RFID-Chip und mindestens eine damit elektrisch leitende Spule aufweist, über die der Datenträger (23) und/oder der RFID-Chip induktiv mit der Antenne des Trägers (18) koppelbar ist.

3. Kennzeichen (10) für ein Fahrzeug nach Anspruch 1 oder 2, **dadurch gekennzeichnet, dass** der Träger (18) als selbstklebende Folie (15) ausgebildet ist, die derart dimensioniert ist, dass sie wenigstens bereichsweise mit einem Randbereich (17) des Durchbruchs (13) in dem Kennzeichenkörper (11) überlappt.

4. Kennzeichen (10) für ein Fahrzeug nach einem der vorherigen Ansprüche, **dadurch gekennzeichnet, dass** der Träger (19), insbesondere die Folie, wenigstens eine teilweise elektrisch leitende Beschichtung aufweist und durch diese Beschichtung die wenigstens eine Antenne, insbesondere eine Antennenstruktur, gebildet ist.

5. Kennzeichen (10) für ein Fahrzeug nach einem der vorherigen Ansprüche, **dadurch gekennzeichnet, dass** der Träger (18), insbesondere die Folie, als metallische Folie ausgebildet ist und durch einen Schlitz (20) in dem Träger (18) die wenigstens eine Antenne, insbesondere eine Antennenstruktur, gebildet ist.

6. Kennzeichen (10) für ein Fahrzeug nach einem der vorherigen Ansprüche, **dadurch gekennzeichnet, dass** der Träger (18), insbesondere die Folie, aus einem flexiblen Kunststoff, vorzugsweise aus PET, ist.

7. Kennzeichen (10) für ein Fahrzeug nach einem der vorherigen Ansprüche, **dadurch gekennzeichnet, dass** der Schlitz (20) auf dem Träger (18) an einem Ende eine Verbreiterung (21) aufweist, in der der Datenträger (23) und/oder der RFID-Chip und/oder die Spule, insbesondere elektrisch isoliert von den leitenden Bereichen des Trägers (18), positioniert ist.

8. Kennzeichen (10) für ein Fahrzeug nach einem der vorherigen Ansprüche, **dadurch gekennzeichnet, dass** der Durchbruch (13) in dem Kennzeichenkörper (11) als Rechteck, insbesondere als Schlitz ausgebildet ist.

9. Kennzeichen (10) für ein Fahrzeug nach einem der vorherigen Ansprüche, **dadurch gekennzeichnet, dass** der Kennzeichenkörper (11) aus einem elektrisch leitfähigen Material, vorzugsweise Aluminium oder einer Aluminiumlegierung, gebildet ist.

10. Kennzeichen (10) für ein Fahrzeug nach einem der vorherigen Ansprüche, **dadurch gekennzeichnet, dass** der Träger (18) mit der Antenne und dem Datenträger (23) durch eine elektrisch leitende, selbstklebende, vorzugsweise beidseitig selbstklebende, Folie (15) über dem Durchbruch (13) auf dem Kennzeichenkörper (13) applizierbar ist, so dass der Träger (18) mechanisch und elektrisch mit dem Kennzeichenkörper (11) gekoppelt ist.

11. Kennzeichen (10) für ein Fahrzeug nach einem der vorherigen Ansprüche, **dadurch gekennzeichnet, dass** der Träger (18) und/oder der Kennzeichenkörper (11) und/oder die Folie (15) von einer, vorzugsweise wenigstens bereichsweise de-metallisierten, Reflexfolie (24) mindestens größtenteils abgedeckt ist.

12. Kennzeichen (10) für ein Fahrzeug nach einem der vorherigen Ansprüche, **dadurch gekennzeichnet, dass** der Durchbruch (13) von einer Rückseite des Kennzeichenkörpers (11) aus mit einer nichtleitenden Abdeckung (26), insbesondere von einer PET-Folie, abgedeckt ist oder der Durchbruch (13) mit einer, vorzugsweise elektrisch nicht leitenden, Masse ausfüllbar ist.

13. Verfahren zur Herstellung eines Kennzeichens (10) für ein Fahrzeug nach mindestens einem der Ansprüche 1 bis 12, **dadurch gekennzeichnet, dass** zunächst ein Kennzeichenkörper (11) mit einem Durchbruch (13) versehen wird und wenigstens über Randbereiche (17) dieses Durchbruchs (13) eine selbstklebende, elektrisch leitfähige Folie (15) aufgebracht wird, wobei auf diese Folie (15) ein mindestens bereichsweise elektrisch leitfähiger Träger (18) mit einer Schlitzantenne (20) und einem Datenträger (12) geklebt wird und anschließend der Kennzeichenkörper (11) mit einer Reflexfolie (24) versehen wird.

14. Verfahren zur Herstellung eines Kennzeichens (10) für ein Fahrzeug nach Anspruch 13, **dadurch gekennzeichnet, dass** nach dem Zusammenstellen des Kennzeichenkörpers (11), der Folie (15), des Trägers (18) und der Reflexfolie (24) eine Beschriftung in den Kennzeichenkörper (11) geprägt wird.

## Claims

1. Registration plate (10) for a vehicle having a two-dimensional registration plate body (11) that has at least one marking field (12), with at least one marking that is assigned to the marking field (12) of the registration plate body (11) and with a reflective film (24) that is at least regionally metallized, wherein the registration plate body (11) has an opening (13) that is at least partially coverable by a two-dimensional, at least partially electrically conductive carrier (18), wherein the carrier (18) has an antenna, formed by at least one slot (20), and a contactlessly readable data carrier (23) that electrically couples to said antenna, and the carrier (18) is embodied as a film (15) which is dimensioned such that it at least regionally overlaps a peripheral region (17) of the opening (13) in the registration plate body (11).

2. Registration plate (10) for a vehicle according to Claim 1, **characterized in that** the data carrier (23) has an RFID chip and at least one coil that is electrically conductive therewith and via which the data carrier (23) and/or the RFID chip is able to be inductively coupled to the antenna of the carrier (18).

3. Registration plate (10) for a vehicle according to Claim 1 or 2, **characterized in that** the carrier (18) is embodied as a self-adhesive film (15) that is dimensioned such that it at least regionally overlaps a peripheral region (17) of the opening (13) in the registration plate body (11).

4. Registration plate (10) for a vehicle according to one of the preceding claims, **characterized in that** the carrier (19), in particular the film, has at least one partially electrically conductive coating, and the at least one antenna, in particular an antenna structure, is formed by said coating.

5. Registration plate (10) for a vehicle according to one of the preceding claims, **characterized in that** the carrier (18), in particular the film, is embodied as a metallic film, and the at least one antenna, in particular an antenna structure, is formed by a slot (20) in the carrier (18).

6. Registration plate (10) for a vehicle according to one of the preceding claims, **characterized in that** the carrier (18), in particular the film, is made from a flexible plastics material, preferably from PET.

7. Registration plate (10) for a vehicle according to one of the preceding claims, **characterized in that** the slot (20) in the carrier (18) has at one end an expanded portion (21) in which the data carrier (23) and/or the RFID chip and/or the coil is positioned, in particular so as to be electrically insulated from the conductive regions of the carrier (18).

8. Registration plate (10) for a vehicle according to one of the preceding claims, **characterized in that** the opening (13) in the registration plate body (11) is embodied as a rectangle, in particular a slot.

9. Registration plate (10) for a vehicle according to one of the preceding claims, **characterized in that** the registration plate body (11) is formed from an electrically conductive material, preferably aluminium or an aluminium alloy.

10. Registration plate (10) for a vehicle according to one of the preceding claims, **characterized in that** the carrier (18) with the antenna and the data carrier (23) is applicable by way of an electrically conductive film (15) that is self-adhesive, preferably self-adhesive on both sides, over the opening (13) in the registration plate body (13) such that the carrier (18) is mechanically and electrically coupled to the registration plate body (11).

11. Registration plate (10) for a vehicle according to one of the preceding claims, **characterized in that** the carrier (18) and/or the registration plate body (11) and/or the film (15) is at least substantially covered by a, preferably at least regionally demetallized, reflective film (24).

12. Registration plate (10) for a vehicle according to one of the preceding claims, **characterized in that** the opening (13) is covered by a non-conductive covering (26), in particular by a PET film, or the opening (13) is able to be filled with a, preferably electrically non-conductive, compound, from a rear side of the registration plate body (11).

13. Method for producing a registration plate (10) for a vehicle according to at least one of Claims 1 to 12, **characterized in that**, initially, a registration plate body (11) is provided with an opening (13) and a self-adhesive, electrically conductive film (15) is applied at least over peripheral regions (17) of said opening (13), wherein an at least regionally electrically conductive carrier (18) with a slot antenna (20) and a data carrier (12) is adhesively affixed onto said film (15) and subsequently the registration plate body (11) is provided with a reflective film (24).

14. Method for producing a registration plate (10) for a vehicle according to Claim 13, **characterized in that**, after the registration plate body (11), the film (15), the carrier (18) and the reflective film (24) have been assembled, a marking is embossed into the registration plate body (11).

## Revendications

1. Plaque d'immatriculation (10) pour un véhicule avec un corps de plaque d'immatriculation plat (11) qui comporte au moins un champ d'inscription (12), avec au moins une inscription qui est associée au champ d'inscription (12) du corps de plaque d'immatriculation (11) et avec une au moins film réfléchissant (24) métallisé partiel ;
le corps de plaque d'immatriculation (11) comporte un passage traversant (13) qui peut être au moins en partie recouvert par un support conducteur plat au moins en partie électriquement conducteur (18), le support (18) comporte une antenne formée par au moins une fente (20) et un support de données (23) lisible sans contact réalisant le couplage électrique à cette antenne et le support (18) étant réalisé en tant que film (15), qu'il chevauche au moins partiellement avec une zone de bordure (17) du passage traversant (13) dans le corps de plaque d'immatriculation (11).

2. Plaque d'immatriculation (10) pour un véhicule selon la revendication 1, **caractérisée en ce que** le support de données (23) comporte une puce RFID et au moins une bobine électriquement conductrice reliée à elle via laquelle le support de données (23) et/ou la puce RFID peuvent être couplés de façon inductive avec l'antenne du support (18).

3. Plaque d'immatriculation (10) pour un véhicule selon la revendication 1 ou 2, **caractérisée en ce que** le support (18) est réalisé sous la forme d'un film autocollant (15) dimensionné de telle sorte qu'il se chevauche au moins en partie avec la zone de bordure (17) du passage traversant (13) dans le corps de plaque d'immatriculation (11).

4. Plaque d'immatriculation (10) pour un véhicule selon l'une quelconque des revendications précédentes, **caractérisée en ce que** le support (19), notamment le film, comporte au moins un revêtement en partie électriquement conducteur et est formé par ce revêtement avec l'au moins une antenne, notamment une structure d'antenne.

5. Plaque d'immatriculation (10) pour un véhicule selon l'une quelconque des revendications précédentes, **caractérisée en ce que** le support (18), notamment le film, est réalisé sous la forme d'un film métallique et est formé par une fente (20) dans le support (18) avec l'au moins une antenne, notamment une structure d'antenne.

6. Plaque d'immatriculation (10) pour un véhicule selon l'une quelconque des revendications précédentes, **caractérisée en ce que** le support (18), notamment le film, est réalisé à partir d'une matière plastique flexible, de préférence du PET.

7. Plaque d'immatriculation (10) pour un véhicule selon l'une quelconque des revendications précédentes, **caractérisé en ce que** la fente (20) comporte, sur le support (18) au niveau d'une extrémité, un élargissement (21) dans lequel le support de données (23) et/ou la puce RFID et/ou la bobine, est positionnée, notamment de façon électriquement isolée des zones conductrices du support (18).

8. Plaque d'immatriculation (10) pour un véhicule selon l'une quelconque des revendications précédentes, **caractérisée en ce que** le passage traversant (13) est réalisé dans le corps de plaque d'immatriculation (11) sous la forme d'un rectangle, notamment sous la forme d'une fente.

9. Plaque d'immatriculation (10) pour un véhicule selon l'une quelconque des revendications précédentes, **caractérisée en ce que** le corps de plaque d'immatriculation (11) est formé à partir d'un matériau électriquement conducteur, de préférence de l'aluminium ou un alliage d'aluminium.

10. Plaque d'immatriculation (10) pour un véhicule selon l'une quelconque des revendications précédentes, **caractérisée en ce que** le support (18) est couplé à l'antenne et au support de données (23) au travers d'un film (15) autocollant électriquement conducteur, de préférence autocollant des deux côtés pouvant être appliqué sur le corps de plaque d'immatriculation (13) au travers du passage traversant (13), de sorte que le support (18) soit couplé mécaniquement et électriquement au corps de plaque d'immatriculation (11) .

11. Plaque d'immatriculation (10) pour un véhicule selon l'une quelconque des revendications précédentes, **caractérisée en ce que** le support (18) et/ou le corps de plaque d'immatriculation (11) et/ou le film (15) est recouvert au moins en majeure partie par un film réfléchissant (24) de préférence au moins en partie démétallisé.

12. Plaque d'immatriculation (10) pour un véhicule selon l'une quelconque des revendications précédentes, **caractérisée en ce que** le passage traversant (13) peut être recouvert par un côté arrière du corps de plaque d'immatriculation (11) à partir d'un cache (26) non conducteur, notamment par un film en PET ou que le passage traversant (13) peut être rempli d'une masse de préférence non électriquement conductrice.

13. Procédé de fabrication d'une plaque d'immatriculation (10) pour un véhicule selon au moins l'une quelconque des revendications 1 à 12, **caractérisé en ce qu'**un corps de plaque d'immatriculation (11) est d'abord pourvu d'un passage traversant (13) et qu'un film autocollant électriquement conducteur (15) est appliqué au moins sur les zones de bordure (17) de ce passage traversant (13), un support (18) au moins en partie électriquement conducteur (15) avec une antenne à fente (20) et un support de données (12) est collé sur ce film et qu'ensuite, le corps de plaque d'immatriculation (11) est pourvu d'un film réfléchissant (24).

14. Procédé de fabrication d'une plaque d'immatriculation (10) pour un véhicule selon la revendication 13, **caractérisé en ce qu'**après l'assemblage du corps de plaque d'immatriculation (11), du film (15), du support (18) et du film réfléchissant (24), une inscription est estampée dans le corps de plaque d'immatriculation (11).
